# EUROPÄISCHE PATENTSCHRIFT

(11) **EP 0 882 535 B1**
(45) Veröffentlichungstag und Bekanntmachung des Hinweises auf die Patenterteilung: **08.08.2001**
(21) Anmeldenummer: 98810505.2
(22) Anmeldetag: 02.06.1998
(51) Int. Cl.: B23B 31/36, B23Q 1/54

(54) **Vorrichtung zum Ausrichten von Rundlauffehlern eines Werkzeugs**
Alignment device correcting the runout of a tool
Dispositif pour corriger les défauts d'alignement d'un outil

(30) Priorität: 05.06.1997 CH 135397
(43) Veröffentlichungstag der Anmeldung: 09.12.1998
(73) Patentinhaber: POLYTOOL AG, 2544 Bettlach (CH)
(72) Erfinder: Vig, Istvan, 2544 Bettlach (CH)
(74) Vertreter: BOVARD AG - Patentanwälte

(56) Entgegenhaltungen:
- EP-A- 0 235 327
- GB-A- 1 435 513
- JP-A- 61 008 251

## Beschreibung

Die vorliegende Erfindung bezieht sich auf eine Vorrichtung zum Ausrichten von Rundlauffehlern eines Werkzeugs, das in einen Werkzeughalter einer Werkzeugmaschine eingespannt ist, gemäss dem Oberbegriff des Patentanspruchs 1 (siehe JP-A-61-8251).

Rundlauffehler eines Werkzeugs, das in einer Werkzeugaufnahme eines zweiteiligen Werkzeughalters eingespannt ist, welcher seinerseits in einer Werkzeugmaschine eingespannt ist und um eine Drehachse rotiert, können einerseits dadurch entstehen, dass die Achse des Werkzeugs bezüglich der Drehachse des Werkzeughalters verschoben ist. Andererseits können Rundlauffehler eines entsprechenden Werkzeugs zusätzlich noch oder für sich allein dadurch entstehen, dass die Achse des Werkzeugs zur Drehachse schief steht, was bedeutet, dass ein Winkelfehler vorliegt.

In der EP-A-0 235 327 ist beispielsweise eine Einrichtung zur Verschiebung der Achse eines durch einen zweiteiligen Werkzeughalter gehaltenen Werkzeugs dargestellt. Die beiden Halterteile sind mit einer Flanschverbindung durch Spannschrauben miteinander verbunden. Der eine Halterteil kann somit durch eine Stelleinrichtung, die aus einer in einen Stellring eingeschraubten Stellschraube besteht, welcher Stellring an der kreiszylindrischen Umfangsfläche des andern Halterteils verdrehbar geführt ist, bezüglich des einen Halterteils verschoben werden. Hierzu kann nach dem Lösen der Spannmittel die Stellschraube verdreht werden, wodurch die gewünschte Verschiebung des Halterteils bezüglich des andern erfolgt.

Ein Nachteil dieser Einrichtung besteht darin, dass damit eine Parallelverschiebung des Werkzeugs vorgenommen werden kann, während jedoch Winkelfehler des Werkzeugs nicht ausgeglichen werden können.

Ein weiterer Nachteil dieser Einrichtung besteht darin, dass durch den Einstellring, der über die kreiszylindrischen Umfangsflächen der beiden Halterteile des Werkzeughalters gestülpt wird, der Durchmesser des Werkzeughalters vergrössert wird.

Zum Ausgleichen eines Winkelfehlers sind auch schon zweiteilige Werkzeughalter gebaut worden, bei welchem zusätzlich zu den Spannschrauben noch Stellschrauben angebracht sind. Der eine Halterteil des Werkzeughalters stützt sich somit über die Stellschrauben auf dem anderen Halterteil ab. Durch Einstellen der Stellschrauben kann somit eine winkelige Lage des einen Halterteils bezüglich des anderen erreicht werden. Es hat sich aber herausgestellt, dass es mit einer derartigen Einrichtung nicht möglich ist, eine Rundlaufabweichung in Form eines Winkelfehlers eines Werkzeugs in nachvollziehbarer Weise auszurichten.

Insbesondere bei Führungsreibahlen oder mehrstufigen Reibahlen hat sich gezeigt, dass eine genaue Ausrichtung wünschenswert wäre, wobei die obengenannten beiden Möglichkeiten von Rundlauffehlern ausgleichbar sein sollten.

Die Aufgabe der vorliegenden Erfindung besteht nun darin, eine Einrichtung zu schaffen, mit welcher Rundlauffehler eines Werkzeugs, die sowohl aufgrund einer verschobenen Achse des Werkzeugs zur Drehachse als auch aufgrund eines Winkelfehlers der Achse des Werkzeugs bezüglich der Drehachse der Werkzeugmaschine auftreten können, in einfacher Weise ausgeglichen werden können.

Erfindungsgemäss erfolgt die Lösung dieser Aufgabe durch die im Anspruch 1 angegebenen Merkmale.

Dadurch, dass der erste Teil des Werkzeughalters an der dem zweiten Teil zugewandten Seite einen Flansch aufweist, der durch die Abstützmittel des zweiten Teils abgestützt ist, kann der erste Teil bezüglich des zweiten Teils in radialer Richtung zur Drehachse verschoben werden, wodurch eine Parallelverschiebung der Achse des Werkzeugs ermöglicht wird. Weil zudem die Abstützmittel aus zwei übereinander liegenden Ringen besteht, die in vorteilhafter Weise einander anliegende Ringfläche aufweisen, die jeweils um einen Winkel α geneigt sind, kann durch Verdrehen des einen Ringes bezüglich des anderen eine Veränderung der Winkellage der Achse des Werkzeugs zur Drehachse erreicht werden.

In vorteilhafter Weise sind die beiden Ringe in einer nutförmigen Ausnehmung des zweiten Teils des Werkzeughalters angeordnet, wobei einer der beiden Ringe im Bereich des inneren Durchmessers mit einem vorstehenden umlaufenden Kragen ausgestattet ist. Der andere Ring ist so auf diesen Kragen aufgelegt, dass dessen Innenfläche auf der Aussenfläche des Kragens aufliegt. Dadurch kann in optimaler Weise eine gegenseitige Verdrehung der beiden Ringe oder ein gemeinsames Verdrehen der Ringe erwirkt werden.

Um zu vermeiden, dass der auf den Kragen des einen Ringes aufgesetzte andere Ring, der praktisch spielfrei geführt sein muss, sich wegen der geneigten Flächen beim Verdrehen des einen Ringes bezüglich des anderen verkantet, weist die Aussenfläche des Kragens eine konvexe Form auf.

Damit ein gegenseitiges Verdrehen der beiden Ringe oder ein gemeinsames Verdrehen der beiden Ringe problemlos möglich ist, sind die beiden Ringe mit lösbaren Arretiermitteln ausgestattet.

In vorteilhafter Weise sind die Ringe an deren Umfang mit einer Skala ausgestattet, so dass die jeweilige gegenseitige Lage der beiden Ringe als auch die Lage bezüglich des zweiten Teils des Werkzeughalters problemlos feststellbar und die gewünschte Lage einstellbar ist.

Da die als Spannmittel wirkenden Schrauben zum Ausrichten der Rundlauffehler gelöst sein müssen, und damit vermieden wird, dass eine ungewollte Verstellung erfolgt, sind zwischen den Köpfen der Schrauben und dem ersten Teil des Werkzeughalters Federringe angebracht, wodurch eine Vorspannung erhalten wird, welche ein Ausrichten zulässt.

Die Einstellmittel zum Verschieben des ersten Teils bezüglich des zweiten Teils des Werkzeughalters sind so ausgestaltet, dass sie zum Ausrichten der Rundlauffehler auf den Werkzeughalter aufsetzbar und danach von diesem wieder abnehmbar sind. Dadurch wird der Vorteil erreicht, dass die Einstellmittel für Werkzeughalter verwendet werden können, die unterschiedliche Durchmesser aufweisen.

Vorteilhafte Ausgestaltungen der Einstellmittel ergeben sich aus den weiteren abhängigen Ansprüchen.

Eine Ausführungsform der Erfindung wird nachfolgend anhand der beiliegenden Zeichnung beispielhaft näher erläutert. Es zeigt
Fig. 1 eine seitliche Ansicht der erfindungsgemässen Vorrichtung, zum Teil im Schnitt;
Fig. 2 in vergrösserter Darstellung einen Querschnitt durch die beiden Ringe der Vorrichtung gemäss Fig. 1;
Fig. 3 eine Ansicht von vom auf das Verstellelement im auf den Werkzeughalter aufgesetzten Zustand;
Fig. 4 bis Fig. 6 in schematischer Darstellung das Ausrichten von Rundlauffehlern eines Werkzeugs, wobei Fig. 4 eine unkorrigierte Situation darstellt, Fig. 5 die Situation mit korrigiertem Winkelfehler darstellt und Fig. 6 die Einrichtung mit voll ausgerichtetem Werkzeug darstellt.

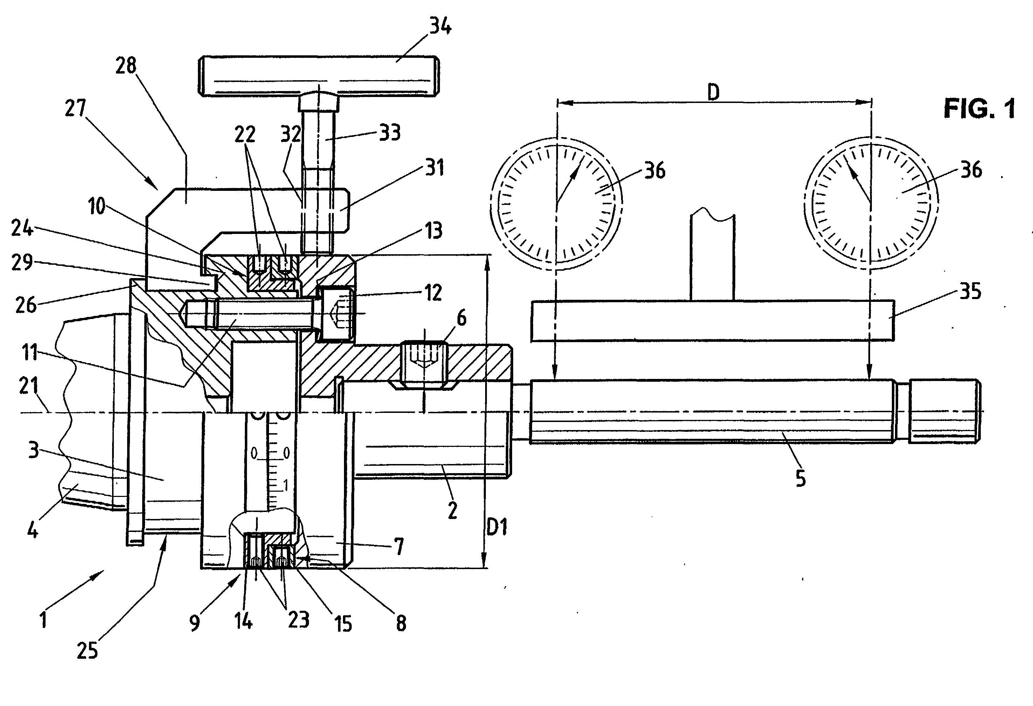

Wie aus Fig. 1 ersichtlich ist, besteht ein Werkzeughalter 1 aus einem ersten Teil 2 und einem zweiten Teil 3. Der zweite Teil 3 ist hierbei in bekannter Weise beispielsweise über einen Konus 4 in eine nicht dargestellte Werkzeugmaschine einspannbar.

In den ersten Teil 2 ist ein Werkzeug 5, beispielsweise eine Reibahle, einsetzbar und wird über die Halteschraube 6 gehalten.

Der erste Teil 2 und der zweite Teil 3 des Werkzeughalters 1 sind an den einander zugewandten Seiten flanschförmig ausgebildet. Die durch den Flansch 7 des ersten Teils 2 gebildete Fläche 8 stützt sich dabei im zusammengesetzten Zustand des Werkzeughalters 1 auf Abstützmitteln 9 ab, die in einer nutförmigen Ausnehmung 10 des zweiten Teils 3 eingesetzt sind. Der erste Teil 2 wird hierbei mittels Spannmitteln in Form von Schrauben 11 gegeneinander gespannt, wobei zwischen dem Kopf 12 der Schrauben 11 und dem ersten Teil 2 Federringe 13 angebracht sind. Die Fläche 8 und die Abstützmittel 9 sind im wesentlichen senkrecht zur Drehachse 21 ausgerichtet, um welche der Werkzeughalter 1 im in die Werkzeugmaschine eingespannten Zustand mit dem Werkzeug 5 rotiert.

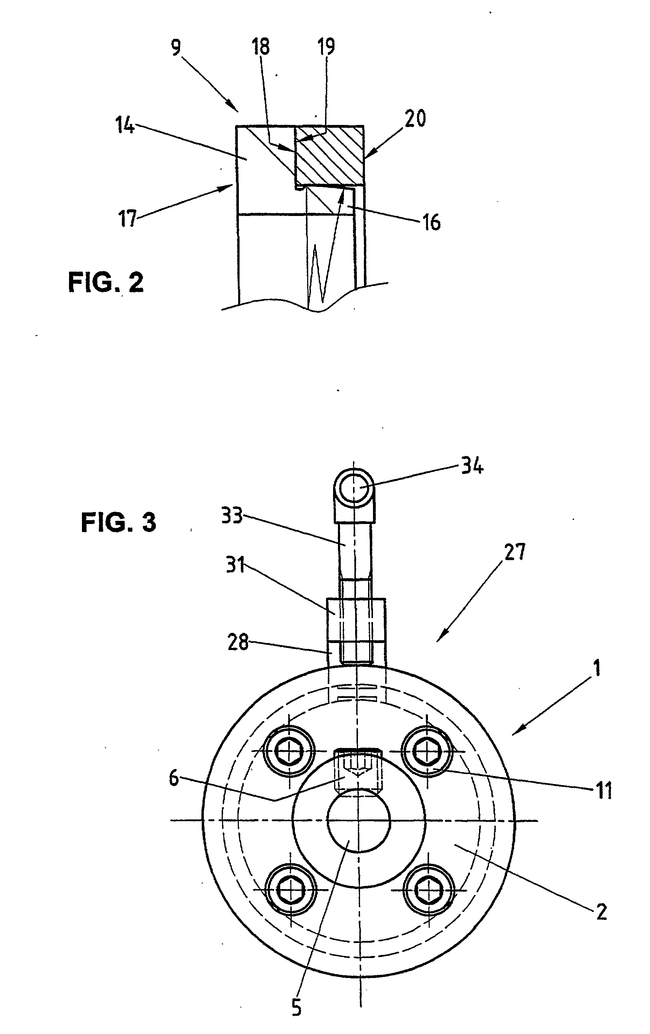

Die Abstützmittel 9 sind aus einem ersten Ring 14 und einem zweiten Ring 15 gebildet, wie dies aus Fig. 2 besser ersichtlich ist. Der erste Ring 14 ist hierbei im Bereich des inneren Durchmessers mit einem vorstehenden umlaufenden Kragen 16 ausgestattet, der zweite Ring 15 ist derart über diesen Kragen 16 gestülpt, dass dessen Innenfläche auf der Aussenfläche des Kragens 16 aufliegt. Diese Aussenfläche des Kragens 16 ist geringfügig konvex ausgebildet.

Der erste Ring 14 weist eine erste Ringfläche 17 und eine zweite Ringfläche 18 auf, während der zweite Ring 15 ebenfalls eine erste Ringfläche 19 und eine zweite Ringfläche 20 aufweist. Die zweite Ringfläche 18 des ersten Ringes 14 und die erste Ringfläche 19 des zweiten Ringes 15 liegen aufeinander. Die zweite Ringfläche 18 ist zur ersten Ringfläche 17 des ersten Ringes 14 geneigt, die erste Ringfläche 19 ist bezüglich der zweiten Ringfläche 20 des zweiten Ringes 15 ebenfalls um dasselbe Mass geneigt. Diese Neigung ist sehr gering, sie beträgt beispielsweise bei einem Aussendurchmesser der beiden Ringe 14 und 15 von 100 mm etwa 0,1 mm, was etwa einem Winkel α von 0,06 ° entspricht.

Die beiden Ringe 14 und 15 sind, wie aus Fig. 1 ersichtlich ist, um die Drehachse 21 verdrehbar. Hierzu sind sie mit jeweils einer Bohrung 22 versehen, in die ein entsprechendes Werkzeug eingesteckt werden kann. Die beiden Ringe 14 und 15 sind einzeln oder gemeinsam verdrehbar, sie sind mittels Arretierschrauben 23 arretierbar.

Im zweiten Teil 3 des Werkzeughalters 1 ist eine umlaufende Nut 24 eingelassen. An diese umlaufende Nut 24 angrenzend ist ein zylindrischer Bereich 25 angeordnet, der durch einen ringförmigen Steg 26 auf der Seite des Konus 4 abgeschlossen ist.

In diesen zylindrischen Bereich 25 sind die Einstellmittel 27 einsetzbar. Diese Einstellmittel 27 umfassen einen Halteteil 28, welcher mit einem Nocken 29 versehen ist, der im eingesetzten Zustand der Einstellmittel 27, wie in Fig. 1 dargestellt ist, in die Nut 24 zu liegen kommt. Der Halteteil 28 stützt sich somit auf dem zylinderförmigen Bereich 25 des zweiten Teils 3 des Werkzeughalters 1 ab.

Der Halteteil 28 ist mit einem Vorsprung 31 versehen, der sich bis über den ersten Teil 2 erstreckt. Der Vorsprung 31 weist eine durchgehende Bohrung 32 auf, die mit einem Gewinde versehen ist, in welche ein Gewindebolzen 33 eingeschraubt ist, der mit einem Drehgriff 34 ausgerüstet ist. Hierbei ist die Bohrung 32 im Vorsprung 31 so angeordnet, dass der Gewindebolzen 33 auf den Flansch des ersten Teils 2 des Werkzeughalters 1 wirkt.

Im Bereich des in den Werkzeughalter 1 eingesetzten Werkzeugs 5 ist eine Tragvorrichtung 35 angebracht, in welche zwei Messmittel 36 eingesetzt sind, beispielsweise Messuhren, die einen gegenseitigen Abstand D voneinander haben und deren Messfühler mit dem Werkzeug 5 in Kontakt kommen. Die Tragvorrichtung 35 kann in nicht dargestellter Weise an der Werkzeugmaschine lösbar befestigt werden.

Fig. 3 zeigt in einer Draufsicht auf den Werkzeughalter 1 den ersten Teil 2 mit darin eingesetztem Werkzeug 5, gehalten durch die Halteschraube 6, sowie die Schrauben 11, mittels welchen der erste Teil 2 auf den nicht sichtbaren zweiten Teil des Werkzeughalters 1 aufgespannt werden kann. Ebenfalls aufgesetzt sind die Einstellmittel 27, bestehend aus dem Halteteil 28, dem Vorsprung 31, dem Gewindebolzen 33 mit dem Drehgriff 34.

Wenn nun ein Werkzeug 5 in den Werkzeughalter 1 eingesetzt ist, wie dies in Fig. 1 dargestellt ist, kann dieses ausgerichtet werden, wozu die Tragvorrichtung 35 mit den beiden Messmitteln 36 in die in Fig. 1 dargestellte Position gebracht wird.

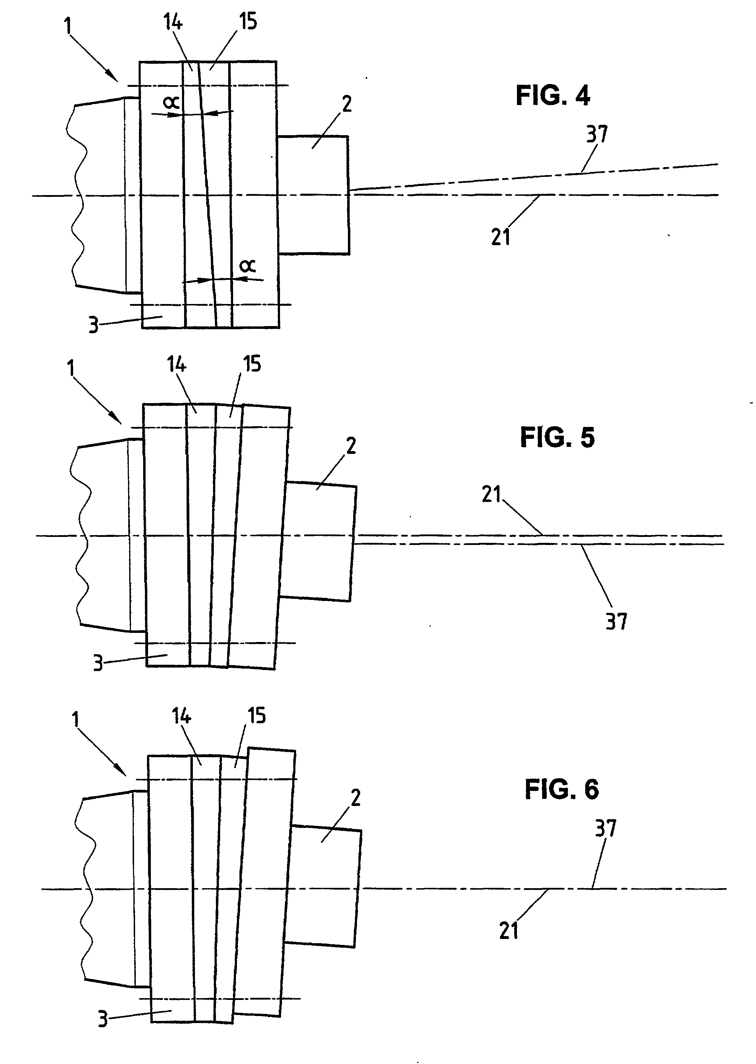

Wie schematisch in Fig. 4 dargestellt ist, kann die Achse 37 des eingespannten Werkzeugs bezüglich der Drehachse 21 des Werkzeughalters 1 schief stehen, in Fig. 4 übertrieben dargestellt. Der erste Ring 14 und der zweite Ring 15 stehen so zueinander, dass der erste Teil 2 genau parallel steht zum zweiten Teil 3 des Werkzeughalters 1. Zum besseren Verständnis sind die Neigungen der entsprechenden Flächen der Ringe 14 und 15 übertrieben gross dargestellt, bezeichnet durch den Winkel α. Die richtige Stellung der beiden Ringe 14 und 15 zueinander kann durch darauf angebrachten Skalen (siehe Fig. 1) kontrolliert werden, wobei eine Parallelstellung des ersten Teils 2 zum zweiten Teil 3 dann erreicht ist, wenn die beiden Nullmarken der Skalen übereinstimmen. Die Spannschrauben werden nun soweit eingeschraubt, bis die Federringe 13 gespannt sind (Fig. 1).

Mit dem näher beim Werkzeughalter 1 angeordneten Messmittel wird nun der Rundlauf des Werkzeugs an dieser Stelle eingestellt. Hierzu wird der höchste Ausschlag des Rundlauffehlers des Werkzeugs, der an diesem Messmittel angezeigt wird, in die dem Messmittel zugewandte Position gebracht. Das Einstellmittel 27 wird auf den Werkzeughalter 1 aufgesetzt, wie dies in Fig. 1 ersichtlich ist, mit dem Drehgriff 34 wird der Gewindebolzen 33 gegen den ersten Teil 2 gedrückt, der erste Teil 2 wird bezüglich des zweiten Teils 3 verschoben, bis das Werkzeug im Bereich des genannten Messmittels rund läuft. Bezogen auf die Fig. 4 bedeutet dies, dass die Achse 37 des Werkzeugs gegen die Drehachse 21 hin verschoben wird, bis sie sich mit dieser im Bereich des genannten Messmittels schneidet.

Wenn nun noch ein Winkelfehler vorliegt, wovon in der Darstellung gemäss Fig. 4 ausgegangen wird, zeigt das vom Werkzeughalter 1 weiter entfernte Messmittel 36 (Fig. 1) einen Rundlauffehler an. Wiederum wird dieser Rundlauffehler so ausgerichtet, dass der grösste Ausschlag gegen das vom Werkzeughalter 1 weiter entfernte Messmittel 36 gerichtet ist. Der zweite Ring 15 kann nun bezüglich des ersten Ringes 14 verdreht werden. Die Skalen auf den beiden Ringen 14 und 15 können dabei so abgestimmt sein, dass sie mit der Skala des vom Werkzeughalter 1 weiter entfernten Messmittels 36 übereinstimmen. Durch den Ausschlag auf dem genannten Messmittel kann somit der zweite Ring 15 um einen entsprechenden Skalenbereich verdreht werden. Der zweite Ring 15 wird dann bezüglich des ersten Ringes 14 arretiert, der erste Ring 14 wird zusammen mit dem zweiten Ring 15 bezüglich des zweiten Teils 3 des Werkzeughalters 1 gedreht, bis nunmehr die höchste Dicke der beiden Ringe 14 und 15 dort steht, wo das genannte Messmittel den höchsten Rundlauffehler angezeigt hat. Der erste Ring 14 wird nun ebenfalls arretiert.

Damit ist nun die Einstellung erreicht, wie sie in Fig. 5 schematisch dargestellt ist. Die Achse 37 des Werkzeugs liegt nun parallel zur Drehachse 21. Die beiden Messmittel 36 zeigen nun einen identischen Rundlauffehler des Werkzeuges an. Das Einstellmittel 27 kann nun wiederum auf den Werkzeughalter 1 an der Stelle aufgesetzt werden, die in einer Linie mit den Messmitteln liegt, wenn diese den höchsten Ausschlag des Rundlauffehlers anzeigen. Der erste Teil 2 des Werkzeughalters kann, wie dies bereits vorgängig beschrieben worden ist, bezüglich des zweiten Teils 3 verschoben werden, bis die Achse 37 des Werkzeugs in der Drehachse 21 liegt, wie dies in Fig. 6 dargestellt ist. Die Schrauben 11 können dann vollständig angezogen werden, das Einstellmittel 27 wird entfernt, ebenfalls die Tragvorrichtung 35 mit den Messmittel 36 (Fig. 1). Das Werkzeug ist nun genau ausgerichtet.

Wie bereits erwähnt worden ist, ist es vorteilhaft, wenn die Skala auf dem zweiten Ring 15 der Skala der Messmittel 36 entspricht (Fig. 1). Wenn der Abstand D der beiden Messmittel gleich ist, wie der Durchmesser D1 der beiden Ringe 14 und 15 würde dies bedeuten, dass bei einer Schrägstellung des ersten Teils 2 des Werkzeughalters um 0,2 mm die Schrägstellung des Werkzeugs 5 zwischen den beiden Messmitteln 36 ebenfalls 0,2 mm ausmachen würde. Selbstverständlich kann der Abstand D auch anders sein, wobei die Skala auf den zweiten Ring 15 mit einer entsprechenden Korrektur versehen sein müsste.

Mit dieser erfindungsgemässen Vorrichtung kann somit ein genaues Ausrichten eines Werkzeugs in einem Werkzeughalter erreicht werden, wobei sowohl radiale Rundlauffehler wie auch Winkelfehler ausgeglichen werden können.

## Patentansprüche

1. Vorrichtung zum Ausrichten von Rundlauffehlern eines Werkzeugs (5), das in einer Werkzeugaufnahme eines ersten Teils (2) eines mindestens zweiteiligen Werkzeughalters (1) eingespannt ist, welcher erste Teil (2) mit einem zweiten Teil (3), der in eine Werkzeugmaschine einspannbar ist und um eine Drehachse (21) rotiert, mittels Spannmitteln (11) lösbar verbunden ist, wobei der erste Teil (2) des Werkzeughalters (1) an der dem zweiten Teil (3) zugewandten Seite einen Flansch (7) mit einer senkrecht zur Drehachse (21) ausgerichteten Fläche (8) aufweist, die auf Abstützmitteln (9) des zweiten Teils (3), bestehend aus einem ersten Ring (14) mit zwei ebenen Ringflächen (17,18), abgestützt ist, und der erste Teil (2) des Werkzeughalters (1) bezüglich des zweiten Teils (3) über Einstellmittel (27) verschiebbar ist, dadurch gekennzeichnet, dass die Abstützmittel (9) weiter aus einem zweiten Ring (15) mit zwei ebenen Ringflächen (19, 20) bestehen, und die Ringe (14, 15) im wesentlichen koaxial zur Drehachse (21) und um diese verdrehbar zwischen dem ersten Teil (2) und dem zweiten Teil (3) des Werkzeughalters (1) angeordnet sind, und dass jeweils eine der Ringflächen (18; 19) bezüglich der anderen Ringfläche (17; 20) jeweils eines Rings (14 bzw. 15) um einen Winkel (α) geneigt ist.

2. Vorrichtung nach Anspruch 1, dadurch gekennzeichnet, dass die einander anliegenden Ringflächen (18, 19) der beiden Ringe (14, 15) jeweils geneigt sind und der Winkel (α) in der Grössenordnung von etwa 0,1° liegt.

3. Vorrichtung nach Anspruch 1 oder 2, dadurch gekennzeichnet, dass die beiden Ringe (14, 15) in einer nutförmigen Ausnehmung (10) des zweiten Teils (3) des Werkzeughalters (1) angeordnet sind.

4. Vorrichtung nach einem der Ansprüche 1 bis 3, dadurch gekennzeichnet, dass einer der beiden Ringe (14) im Bereich des inneren Durchmessers mit einem vorstehenden, umlaufenden Kragen (16) ausgestattet ist und dass der andere Ring (15) derart über diesen Kragen (16) gestülpt ist, dass dessen Innenfläche auf der Aussenfläche des Kragens (16) aufliegt.

5. Vorrichtung nach Anspruch 4, dadurch gekennzeichnet, dass die Aussenfläche des Kragens (16) eine konvexe Form aufweist.

6. Vorrichtung nach einem der Ansprüche 1 bis 5, dadurch gekennzeichnet, dass beide Ringe (14, 15) mit lösbaren Arretiermitteln (23) ausgestattet sind und dass beide Ringe (14, 15) mit Mitteln (22) ausgerüstet sind, über welche die Ringe (14, 15) mit einem Verdrehwerkzeug verdrehbar sind.

7. Vorrichtung nach einem der Ansprüche 1 bis 6, dadurch gekennzeichnet, dass mindestens einer der beiden Ringe (14 bzw. 15) an seinem Umfang mit einer Skala ausgestattet ist.

8. Vorrichtung nach einem der Ansprüche 1 bis 7, dadurch gekennzeichnet, dass die Spannmittel als Schrauben (11) ausgebildet sind, zwischen deren Köpfen (12) und dem ersten Teil (2) des Werkzeughalters (1) Federringe (13) angebracht sind.

9. Vorrichtung nach einem der Ansprüche 1 bis 8, dadurch gekennzeichnet, dass die Einstellmittel (27) einen Halteteil (28) umfassen, welcher auf den zweiten Teil (3) des Werkzeughalters (1) aufsetzbar ist, welcher mit einem Verstellelement (33, 34) ausgestattet ist und welcher nach dem Verschieben des ersten Teils (2) bezüglich des zweiten Teils (3) vom Werkzeughalter (1) abnehmbar ist.

10. Vorrichtung nach Anspruch 9, dadurch gekennzeichnet, dass der Halteteil (28) mit einem Nocken (29) ausgestattet ist, welcher in eine in den zweiten Teil (3) des Werkzeughalters (1) eingelassene, umlaufende Nut (24) einführbar ist, und dass der Halteteil (28) mit einem Vorsprung (31) ausgerüstet ist, welcher im auf den Werkzeughalter (1) aufgesetzten Zustand sich über die beiden Teile (2 und 3) des Werkzeughalters (1) erstreckt und in diesem Vorsprung (31) das Verstellelement (33, 34) angeordnet ist und auf den ersten Teil (2) wirkt.

11. Vorrichtung nach Anspruch 9 oder 10, dadurch gekennzeichnet, dass das Verstellelement aus einem Gewindebolzen (33) besteht, welcher in eine mit einem entsprechenden Gewinde versehenen Bohrung (32) des Vorsprungs (31) des Halteteils (28) einschraubbar ist, welche im wesentlichen senkrecht zur Drehachse (21) ausgerichtet ist, und dass der Gewindebolzen (33) mit einem Drehgriff (34) ausgestattet ist.

## Claims

1. Apparatus for correcting eccentricity of a tool (5), which is chucked in a tool carrier of a first part (2) of an at least two-part toolholder (1), which first part (2) is detachably connected by clamping means (11) to a second part (3) chuckable in a machine tool and rotating about an axis of rotation, the first part (2) of the toolholder (1) having on the side thereof facing the second part (3) a flange (7) having a surface (8) aligned perpendicular to the axis of rotation (21) and supported on supporting means (9) of the second part (3) comprising a first ring (14) with two flat annular surfaces (17, 18), and the first part (2) of the toolholder (1) being displaceable relative to the second part (3) via setting means (27), characterised in that the supporting means (9) further comprise a second ring (15) with two flat annular surfaces (19, 20), and the rings (14, 15) are disposed substantially coaxially with, and rotatingly about, the axis of rotation (21) between the first part (2) and the second part (3) of the toolholder (1), and in that one of the annular surfaces (18; 19) in each case of a ring (14, respectively 15) is inclined by an angle (α) with respect to the other annular surface (17; 20).

2. Apparatus according to claim 1, characterised in that the annular surfaces (18, 19), resting against one another, of the two rings (14, 15) are each inclined, and the angle is on the order of magnitude of about 0.1°.

3. Apparatus according to claim 1 or 2, characterised in that the two rings (14, 15) are disposed in a groove-shaped recess (10) of the second part (3) of the toolholder (1).

4. Apparatus according to one of the claims 1 to 3, characterised in that one of the two rings (14) is provided in the region of the inner diameter with an encircling projecting collar (16), and in that the other ring (15) is slipped over this collar (16) in such a way that its inner surface rests against the outer surface of the collar (16).

5. Apparatus according to claim 4, characterised in that the outer surface of the collar (16) has a convex shape.

6. Apparatus according to one of the claims 1 to 5, characterised in that both rings (14, 15) are provided with releasable stop means (23), and in that both rings (14, 15) are provided with means (22) via which the rings (14, 15) are rotatable by means of a turning tool.

7. Apparatus according to one of the claims 1 to 6, characterised in that at least one of the two rings (14, respectively 15) is provided at its periphery with a scale.

8. Apparatus according to one of the claims 1 to 7, characterised in that the clamping means take the form of screws (11), spring washers (13) being installed between the heads (12) of the screws and the first part (2) of the toolholder (1).

9. Apparatus according to one of the claims 1 to 8, characterised in that the setting means (27) comprise a holding portion (28) which can be placed on the second part (3) of the toolholder (1), which is provided with a setting element (33, 34), and which is removable from the tool holder (1) after displacement of the first part (2) of the toolholder relative to the second part (3).

10. Apparatus according to claim 9, characterised in that the holding portion (28) is provided with a toe (29) insertable in an encircling groove (24) made in the second part (3) of the toolholder (1), and in that the holding portion (28) is provided with a projection (31) which, in the state of being placed upon the toolholder (1), extends over the two parts (2 and 3) of the toolholder (1), and the setting element (33, 34) is disposed in this projection (31) and acts upon the first part (2).

11. Apparatus according to claim 9 or 10, characterised in that the setting element comprises a threaded bolt (33) screwable into a correspondingly threaded bore (32) in the projection (31) of the holding portion (28), which bore is aligned substantially perpendicular to the axis of rotation (21), and in that the threaded bolt (33) is provided with a turning handle (34).

## Revendications

1. Dispositif de compensation de défauts de concentricité d'un outil (5) qui est monté dans un récepteur d'outil d'une première partie (2) d'un porte-outil (1) en deux parties au moins, cette première partie (2) étant fixée de manière amovible, au moyen de dispositifs de montage (11), à une deuxième partie (3) qui peut être montée sur une machine-outil et qui tourne autour d'un axe de rotation (21), la première partie (2) du porte-outil (1) possédant, du côté de la deuxième partie (3), une bride (7) qui présente une surface (8) perpendiculaire à l'axe de rotation (21) et qui s'appuie sur des éléments d'appui (9) de la deuxième partie (3) constitués par un premier anneau (14) présentant deux surfaces annulaires planes (17,18) et la première partie (2) du porte-outil (1) pouvant être déplacée, par rapport à la deuxième partie (3), au moyen d'organes de réglage (27), caractérisé en ce que les éléments d'appui (9) comprennent en outre un deuxième anneau (15) présentant deux surfaces annulaires planes (19, 20), et que les anneaux (14, 15) sont sensiblement coaxiaux à l'axe de rotation (21) et placés, de manière à pouvoir tourner autour de ce dernier, entre la première partie (2) et la deuxième partie (3) du porte-outil (1), et en ce qu'une des surfaces annulaires (18, 19), dans chacun des deux cas, est inclinée d'un angle α par rapport à l'autre surface annulaire (17, 20) de l'un des anneaux (14 ou 15) dans chaque cas.

2. Dispositif selon la première revendication, caractérisé en ce que les surfaces annulaires (18, 19) des deux anneaux (14, 15) appliquées les unes sur les autres sont chacune inclinées et que l'angle α est de l'ordre d'environ 0,1°.

3. Dispositif selon la revendication1 ou 2, caractérisé en ce que les deux anneaux (14, 15) sont logés dans une échancrure en forme d'encoche (10) de la deuxième partie (3) du porte-outil (1).

4. Dispositif selon l'une des revendications 1 à 3, caractérisé en ce que l'un des deux anneaux (14) est pourvu, du côté intérieur, d'un rebord (16) qui fait saillie sur tout son périmètre, et en ce que l'autre anneau (15) est passé par-dessus ce rebord (16) de telle manière que le surface intérieure de celui-ci s'applique sur la surface extérieure du rebord (16).

5. Dispositif selon la revendication 4, caractérisé en ce que la surface extérieure du rebord (16) est de forme convexe.

6. Dispositif selon l'une des revendications 1 à 5, caractérisé en ce que les deux anneaux (14, 15) sont pourvus de moyens de blocage pouvant être relâchés (23) et en ce que les deux anneaux (14, 15) sont pourvus de moyens (22) par l'intermédiaire desquels on peut les faire tourner au moyen d'un outil approprié.

7. Dispositif selon l'une des revendications 1 à 6, caractérisé en ce qu'au moins l'un des deux anneaux (14 ou 15) est pourvu d'une échelle graduée périphérique.

8. Dispositif selon l'une des revendications 1 à 7, caractérisé en ce que les moyens de serrage sont réalisés sous la forme de vis (11) entre les têtes desquelles et la première partie (2) du porte-outil (1) sont placées des rondelles élastiques (13).

9. Dispositif selon l'une des revendications 1 à 8, caractérisé en ce que les moyens de réglage (27) comprennent une pièce de maintien (28) qui peut être placée sur la deuxième partie (3) du porte-outil (1), qui est équipé d'un élément de décalage (33, 34) et qui peut être retiré du porte-outil (1) après le décalage de la première partie (2) par rapport à la deuxième partie (3).

10. Dispositif selon la revendication 9, caractérisé en ce que la pièce de maintien (28) comporte un ergot (29) qui peut être introduit dans une rainure (24) pratiquée dans la deuxième partie (3) du porte-outil (1) et en faisant le tour, et en ce que la pièce de maintien (28) présente une saillie (31) qui, dans la position posée sur le porte-outil (1), s'étend sur les deux parties (2 et 3) du porte-outil (1) et l'élément de réglage (33, 34) est placé dans cette saillie (31) et il agit sur la première partie (2).

11. Dispositif selon la revendication 9 ou 10, caractérisé en ce que l'élément de décalage est constitué par une tige filetée (33) qui peut être vissée dans un trou (32) présentant un filetage correspondant, dans la saillie (31) de la pièce de maintien (28), ce trou étant sensiblement perpendiculaire à l'axe de rotation (21), et en ce que la tige filetée (33) est équipée d'une poignée (34) servant à la faire tourner.
